(19) Europäisches Patentamt

European Patent Office

Office européen des brevets

(11) **EP 0 953 893 A2**

(12) **EUROPEAN PATENT APPLICATION**

(43) Date of publication:
03.11.1999 Bulletin 1999/44

(51) Int. Cl.$^6$: **G06F 3/06**

(21) Application number: 99107467.5

(22) Date of filing: 29.04.1999

(84) Designated Contracting States:
AT BE CH CY DE DK ES FI FR GB GR IE IT LI LU
MC NL PT SE
Designated Extension States:
AL LT LV MK RO SI

(30) Priority: 30.04.1998 US 69993

(71) Applicant:
SAMSUNG ELECTRONICS CO., LTD.
Suwon-City, Kyungki-do (KR)

(72) Inventors:
• Bovatsek, Kenneth John
San Jose, CA 95123 (US)
• Pearson, Mark Steven
Union City, CA 94587 (US)

(74) Representative:
Grünecker, Kinkeldey,
Stockmair & Schwanhäusser
Anwaltssozietät
Maximilianstrasse 58
80538 München (DE)

(54) **Transparent record access manager for a disk drive**

(57) In a disk drive, a transparent record access manager centralizes access to system cylinder records in two global routines for reading and writing to the system cylinder records, and a system cylinder table which maintains address information for the system cylinder records. Internal firmware system cylinder record users and host software programs access system cylinder records through the system cylinder record manager, which in turn locates system cylinder records through the system cylinder table. The transparent record access manager makes any changes to the address or length of a particular system cylinder record transparent to the users of all other system cylinder records. An ATA command process allows a host processor to access a system cylinder record through the read and write routines, or to recieve the system cylinder table from the disk drive.

**System Cylinder Table**

| Index | Relative Record Offset | Record Size | Mirrored/Non-Mirrored |
|---|---|---|---|
| 0 | 2942 | 23 | x |
| 1 | 3016 | 110 | |
| 2 | 3212 | 33 | |
| 3 | 3307 | 5 | |
| 4 | 3319 | 31 | |
| 5 | 3391 | 17 | |
| 6 | 3444 | 33 | |
| 7 | 3517 | 25 | x |
| 8 | 3588 | 51 | |
| 9 | 3699 | 42 | x |
| 10 | 3749 | 29 | |
| 11 | 3803 | 53 | x |

Figure 3

EP 0 953 893 A2

**Description**

BACKGROUND OF THE INVENTION

1) Field of the Invention

This invention pertains to the field of disk drive storage systems and more particularly to system cylinder record manager for system cylinder records in a disk drive storage system.

2) Background of the Related Art

Disk drive storage systems include stored records which are used internally during normal operation and testing. These records, called system cylinder records, are stored in a reserved area of the disk drive called system cylinders. Some examples of records which are typically stored in the system cylinders are: the burn-in status of the disk drive; an error log from the disk burn-in; disk defect records constructed from the error log; and channel tables for each zone of the disk drive. Some of these records are so important to the proper operation of the disk drive that they are mirrored on all heads.

The system cylinder records are accessed by users to perform various operations associated with the disk drive. Users may include record handling subsystems in the disk drive, typically including firmware programs. Users may also include software programs executed on a host processor system to which the disk drive is attached.

In the prior art, each system cylinder record user is required to keep track of the physical location for that record, i.e., cylinder, head, sector address (CHS) and number of records, in the system cylinder records. The user also has to keep track of whether the record is mirrored and if so, the physical location of the mirrored record(s).

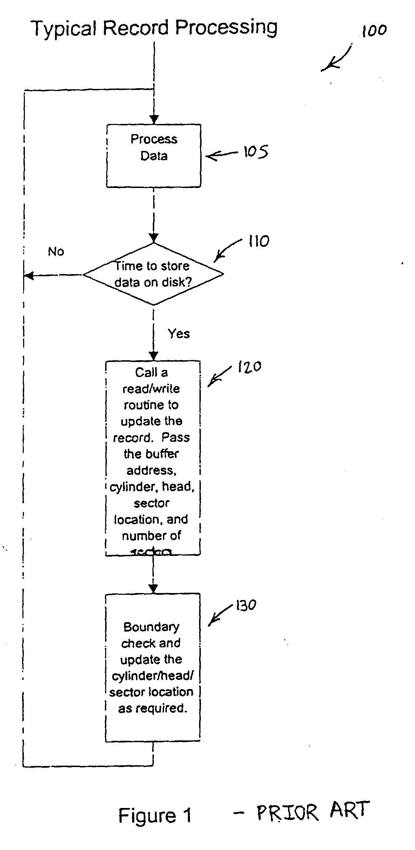

Figure 1 is a flowchart of a prior art process 100 for a system cylinder record user to access and update system cylinder records. In a step 105, the system cylinder record user processes data until it determines in a step 110 that it is time to store data in the system cylinder records. When it is time to store data, in a step 120 the system cylinder record user calls a read/write program to update the record. The system cylinder record user passes to the program the buffer address where the data resides, the cylinder, head, and sector (CHS) address of the system cylinder record, and the number of records to be stored. In a step 130, the system cylinder, record user performs a boundary check and updates the cylinder, head and sector (CHS) address of the system cylinder record as required.

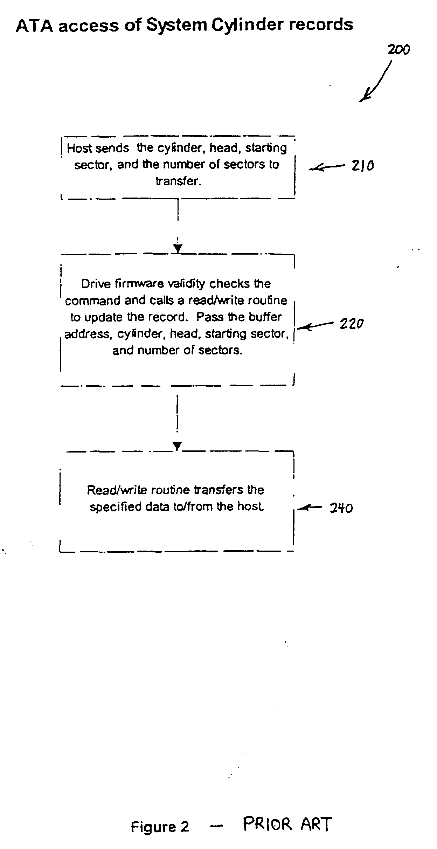

Figure 2 is a flowchart of a prior art AT Attachment (ATA) command process 200 for a host software program on a host processor system to access and update system cylinder records on an attached disk drive. When the host software program determines in a step 210 that it is time to store data in a system cylinder record, the host software program issues a command to the drive firmware to transfer data, sending a cylinder, head, starting sector and the number of records to be transferred. In a step 220, the disk drive then checks the validity of the command, calls a read/write routine, and passes the buffer address where the data resides, the cylinder, head, and sector (CHS) address of the system cylinder record, and the number of records to be written or read. In a step 240, the read/write program transfers the specified data to or from the system cylinder records.

Disadvantageously, in the prior art, modifications to the structure of the system cylinder records required accompanying changes in several areas of the disk drive firmware and host software that access these records. For example, if twelve (12) contiguous system cylinder records exist, and the fifth record is subsequently expanded, then the users of records six through twelve would all have to modify their method of accessing those records.

There are other disadvantages of the prior art systems and methods of accessing and updating system cylinder records. These prior art systems waste code space through redundant operations. Also, boundary checking related to the physical location of the record is lengthy, involving cylinder, head and sector checks.

Accordingly, it would be advantageous to provide a centralized system and method for accessing system cylinder records in a disk drive. It would also be advantageous to provide unique ATA commands which permit software on a host processor to use the system cylinder records. Other and further objects and advantages will appear hereinafter.

SUMMARY OF THE INVENTION

The present invention comprises a system and method of managing system cylinder records in a disk drive.

In one aspect of the invention, a system cylinder record manager centralizes drive firmware and host software access to the system cylinder records. All users of system cylinder records access the records through the system cylinder record manager.

In another aspect of the invention, a system cylinder record manager incorporates a system cylinder table. The system cylinder table defines the address of system cylinder records as relative record offsets from the start of the system cylinder record area in the disk drive. The system cylinder table maintains information about each record, for example the size of each record and whether or not the record is mirrored.

In another aspect of the invention, a system cylinder record manager provides a unique AT Attachment (ATA) command which permits host software running on a host processor to access system cylinder records in an attached disk drive.

BRIEF DESCRIPTION OF THE DRAWINGS

Figure 1 is a flowchart of a prior art process for a system cylinder record user to access and update system cylinder records.
Figure 2 is a flowchart of a prior art AT Attachment (ATA) command process for a host software program on a host processor system to access and update system cylinder records.
Figure 3 is a diagram of a preferred embodiment of a system cylinder record table according to the present invention.
Figure 4A is a flowchart for a preferred embodiment of a process for accessing and reading information from system cylinder records with a transparent record access manager (TRAM)according to the present invention.
Figure 4B is a flowchart for a preferred embodiment of a process for accessing and writing information to system cylinder records with a transparent record access manager(TRAM) according to the present invention.
Figure 5 is a flowchart for an AT Attachment (ATA) command process for host processor access to records with a transparent record access manager(TRAM) according to the present invention.

DESCRIPTION OF THE PREFERRED EMBODIMENTS

The present invention centralizes system cylinder record handling in two system cylinder record access programs and a system cylinder table. Internal firmware system cylinder record users and host software programs access system cylinder records through the two programs. The programs make any changes in address or length of the records transparent to the system cylinder record users. This transparent operation will be more clearly understood with reference to the description of the preferred embodiments below.

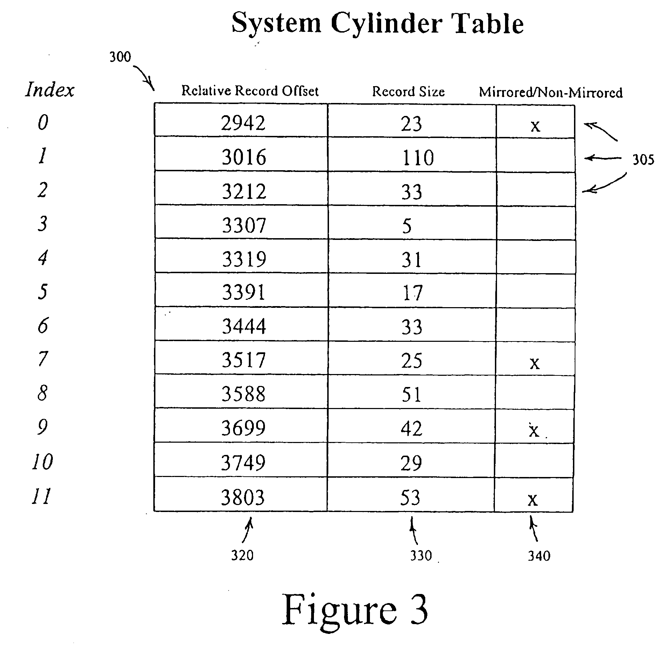

Figure 3 shows a preferred embodiment of a system cylinder table 300. The system cylinder table 300 includes a plurality of table entries 305, each table entry 305 having a relative record offset field 320, a record size field 330 and a mirrored/non-mirrored field 340. Each table entry 305 corresponds to and identifies a particular system cylinder record in the system cylinder table 300.

Each table entry corresponding to a system cylinder record may be accessed by indexing into the system cylinder table by a number of table entries equal to an index value, as shown in Figure 3. In the embodiment of Figure 3, a table entry with an index value of "0" corresponds to a burn-in status record; a table entry with an index value of "1" corresponds to a defect list record; a table entry with an index value of "2" corresponds to an error log record, etc. Thus table entries are accessed with an index value corresponding to the location of a particular table entry in the system cylinder table.

For each system cylinder record in the system cylinder table 300, there is a corresponding relative record offset value in the relative record offset field 320. In the example shown in Figure 3, the first table entry (index value of "0") has a relative record offset value of 2942, the second system cylinder record (index value of "1") has a relative record offset value of 3016, etc. The relative record offset value indicates the address of the start of the particular record in the system cylinder records of the disk drive.

The relative record offset value corresponds to the record start address in standard cylinder/head/sector (CHS) format according to the following Equation [1]:

$$\text{Relative record offset} = (\text{Cylinder})*(\text{Heads/Cylinder})*(\text{Sectors/Head}) + \text{Head} *(\text{Sectors/Head}) + \text{Sector}$$

For example, consider a disk drive where there are 12 heads per cylinder and 60 sectors per head. To find the relative record offset value corresponding to a CHS address of 4/1/2, one would find from Equation [1]:

$$\text{Relative record offset} = (4*12*60) +(1*60) +2 = 2880 + 60 + 2 = 2942$$

which in the example of Figure 3 corresponds to the start of the record having index value = "0" (e.g., burn-in status).

Each table entry also has a corresponding record size in the record size field 330 and a mirrored/non-mirrored flag in the mirrored/non-mirrored field 340. The record size corresponds to the number of sectors used by the record. The mirrored/non-mirrored flag is set to indicate that the record is mirrored in the system cylinder records. A disk drive may have a plurality of heads for reading and writing to a plurality of disk surfaces, in which case one or more system cylinder records may be mirrored on another disk surface and accessed by another head. The disk drive may have a single disk or it may have a plurality of disks which are read by a plurality of heads, in which case the record may be mirrored on all heads.

Thus the system cylinder table provides a mechanism for maintaining the addresses of system cylinder records in the disk drive. Whenever modifications are made to the structure of the system cylinder records, the addresses are easily updated in this single table. For example, a new record can be added by creating a new table entry, with a new index value, which indicates the information (address, record size, mirrored/non-mirrored status) pertaining to the new record.

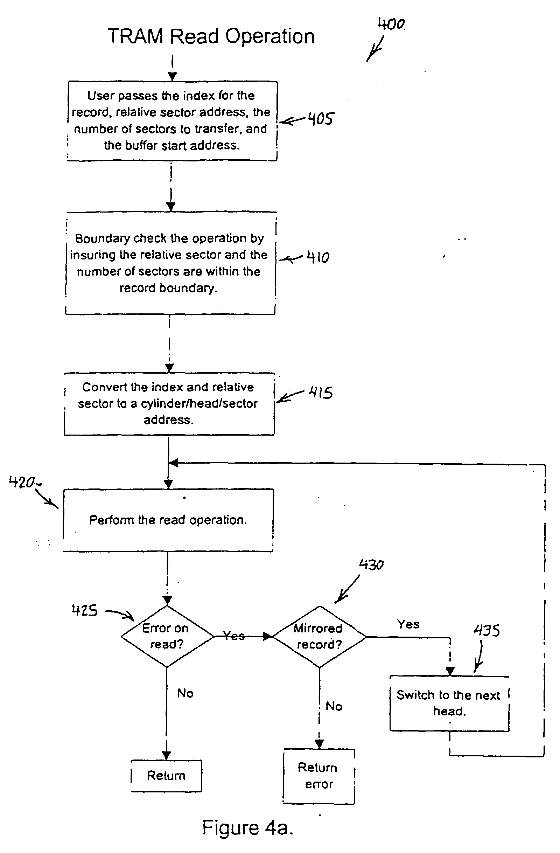

Figure 4A shows a flowchart for a preferred embodiment of a Transparent Record Access Manager (TRAM) read routine 400 for accessing and reading information from system cylinder records in conjunction with a system cylinder table such as the system cylinder table of Figure 3.

In a step 405, a system cylinder record user passes the index value and the relative sector address of a record to be read, the number of sectors to be read, and the buffer start address where the data is to be transferred.

In a step 410, a boundary check is performed to insure that the requested records are within the record boundary. The operation is not performed and an error is returned if the requested records are outside the boundary. In a step 415, the index value and relative sector address are converted to a CHS address using the system cylinder table. As discussed above, the index value identifies the desired table entry in the system cylinder table. The desired table entry is accessed to obtain a relative record offset for the corresponding record. Using Equation (1) above, the relative record offset is converted into a CHS address. Then the relative sector address is added to produce the CHS starting address for the record to be read.

In a step 420, the read operation is performed and the record information is transferred to the buffer.

In a step 425, a check is performed to determine whether or not an error has occurred. If an error has not occurred, the program 400 ends. If an error has occurred, then in a step 430, a check is performed to determine if the requested record is mirrored.

The desired table entry is accessed to obtain the corresponding mirrored/non-mirrored flag. If the flag is not set, indicating that the record is not mirrored, then an error has occurred and the program 400 ends, returning the error.

If the flag is set, indicating that the record is mirrored, then in a step 435 the head is switched to read the mirrored record. Then the step 420 is repeated for the mirrored record, the read operation is performed and the record information is transferred to buffer.

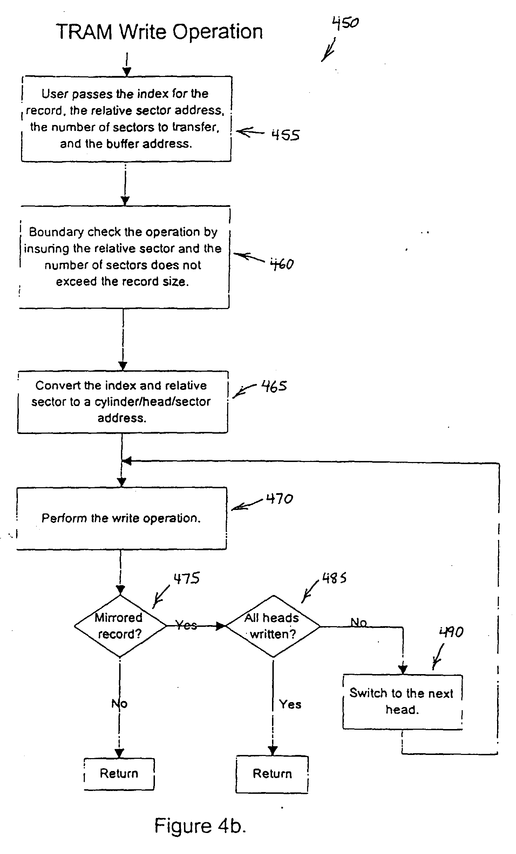

Figure 4B shows a flowchart for a preferred embodiment of a TRAM write routine 450 for accessing and writing information to system cylinder records in conjunction with a system cylinder table such as the system cylinder table of Figure 3.

In a step 455, the system cylinder record user passes the index value and the relative sector address of the record to be written, the number of sectors to transfer, and the buffer start address where the data is to be written resides.

In a step 460, a boundary check is performed to insure that the requested records are within the record boundary. The operation is not performed and am error is returned if the requested records are outside the boundary. In a step 465, the index value and relative sector address are converted to a CHS address using the system cylinder table. The index value is used to access the desired table entry in the system cylinder table. The desired table entry is accessed to obtain a relative record offset for the corresponding record. Using Equation (1) above, the relative record offset is converted into a CHS address. Then the relative sector address is added to produce the CHS starting address for the record to be written.

In a step 470, the record information is transferred from the buffer and the write operation is performed.

In a step 475, a check is performed to determine if the requested record is mirrored. The desired table entry is accessed to obtain the corresponding mirrored/non-mirrored flag. If the flag is not set, indicating that the record is not mirrored, then the program 450 ends.

If the flag is set, indicating that the record is mirrored, then in a step 485 a check is performed whether all heads have been written for the mirrored record. If all heads have been written, then the program 450 ends.

If all heads have not been written, then in a step 490 the head is switched. Then the step 470 is repeated for the mirrored record, the record information is transferred from the buffer and the write operation is performed.

In a preferred embodiment, the read routine and the write routine code may be stored in read-only memory (ROM) within a disk drive.

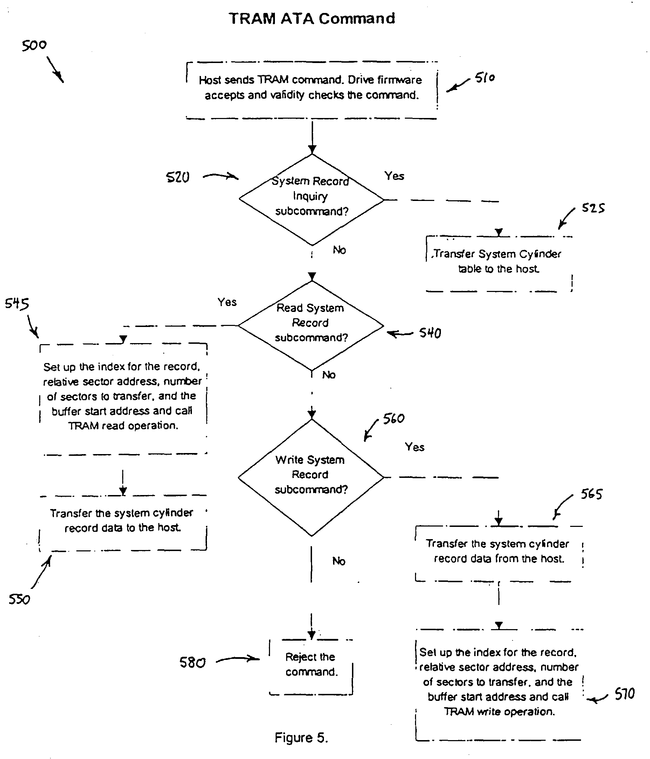

Figure 5 shows a flowchart for a preferred embodiment of an AT Attachment (ATA) command process 500 for allowing host processor software access of system cylinder records in a disk drive incorporating a transparent record access manager according to one or more aspects of the present invention. When the host processor desires to access a system cylinder record, in a step 510 it sends a special ATA TRAM command to drive firmware. The drive firmware accepts and checks the validity of the command.

In a step 520, the drive firmware determines if the command is a System Record Inquiry subcommand. If so, then in a step 525 the firmware transfers the System Cylinder table to the host processor. In that case, the host software could reconstruct the system cylinder/head/sector location for a record and operate on the record as illustrated in Figure 2. In that case, the record size in the system cylinder table limits the number of records to process.

In a step 540, the drive firmware determines if the command is a Read System Record subcommand. If so, then the subcommand also includes parameters including an index identifying a desired record, a relative sector address, and a number of sectors to read. In that case, in a step 545 the firmware calls a read routine such as that shown in Figure 4A and passes the index value for the record to be read, the relative sector address, the number of sectors to read, and the buffer start address where the data is to be placed. After the data is read, in a step 550 the firmware transfers the system cylinder record data to the host processor software.

In a step 560, the drive firmware determines if the command is a Write System Record subcommand. If so, then the subcommand also includes parameters including an index identifying a desired record, a relative sector address, and a number of sectors to read. In that case, in a step 565, the firmware transfers the system cylinder record data from the host processor software. Then, in a step 570, the firmware calls a write routine such as that shown in Figure 4B and passes the index value for the record to be written, the relative sector address, the number of sectors to write, and the buffer start address where the data is to located.

Finally, in a step 580, if the command is not a System Record Inquiry, a Read System Record Subcommand, or a Write System Record subcommand, then the drive firmware rejects the command.

It should be understood that variations of this preferred embodiment are possible. For example, an alternative embodiment of an ATA command process may omit the System Record Inquiry subcommand and not pass the System Cylinder Table to the host processor. Also, another embodiment of an ATA command process may not allow the host processor to write data into the system cylinder records, in which case steps 560, 565 and 570 may be omitted.

While preferred embodiments are disclosed herein, many variations are possible which remain within the concept and scope of the invention. Such variations would become clear to one of ordinary skill in the art after inspection of the specification, drawings and claims herein. The invention therefore is not to be restricted except within the spirit and scope of the appended claims.

## Claims

1.   A system cylinder record manager accessing a plurality of system cylinder records in a disk drive, said system cylinder record manager comprising;

a system cylinder table storing a plurality of table entries, each of said table entries further comprising a relative record offset value for a one of the plurality of system cylinder records;
a first program reading data from the system cylinder records, finding a starting address for each one of the plurality of system cylinder records from the relative record offset value for said each one system cylinder record in the system cylinder table; and
a second program writing data to the system cylinder records, finding the starting address of each one or the plurality of system cylinder records from the relative record offset value for said each one system cylinder record in the system cylinder table.

2.   The system cylinder record manager of claim 1, wherein the starting address is a cylinder number "C", a head number "H", and a sector number "S" address.

3.   The system cylinder record manager of claim 2, wherein the disk drive comprises "N" heads and a disk having "M" sectors, wherein the relative record offset value is equal to $C*N*M + H*M + S$.

4.   The system cylinder record manager of claim 3, wherein the disk drive comprises a plurality of disks.

5.   A system cylinder table in a disk drive, comprising a plurality of table entries, each said table entry further comprising

a relative record offset field containing a relative record offset value indicating a starting address for the system cylinder record.

6.   The system cylinder table of claim 5, wherein the disk drive comprises "N" heads and a disk having "M" sectors, and wherein the starting address for the system cylinder record is a cylinder number "C", a head number "H", and a sector number "S" address.

7. The system cylinder table of claim 6, wherein the relative record offset value is equal to C*N*M + H*M + S.

8. The system cylinder table of claim 5, wherein each said table entry further comprises a record size field containing a record size for the system cylinder record, wherein the record size corresponds to the number of sectors used by the record.

9. The system cylinder table of claim 5, wherein each said table entry further comprises a mirrored/non-mirrored field containing a mirrored/non-mirrored flag, wherein the mirrored/non-mirrored flag is set to indicate that the record is mirrored in the system cylinder records, and is not set to indicate that the record is not mirrored.

10. A method of accessing a desired system cylinder record in a disk drive, comprising:

   receiving a relative sector address and an index value, said index value identifying a desired table entry in a system cylinder table comprising a plurality of table entries;
   using the index value to locate the desired table entry in a system cylinder table,
   accessing the desired table entry;
   finding a relative record offset value in a relative record offset field of the desired table entry; and
   converting the relative record offset value and relative sector address into a starting address for accessing the desired system cylinder record.

11. The method of accessing a system cylinder record in a disk drive of claim 10, wherein the starting address comprises a cylinder number "C", a head number "H", and a sector number "S" address.

12. The method of accessing a system cylinder record in a disk drive of claim 11, wherein the disk drive comprises "N" heads and a disk having "M" sectors, and wherein the relative record offset value is equal to C*N*M + H*M + S.

13. The method of accessing a system cylinder record in a disk drive of claim 10, further comprising,

   finding a mirrored/non-mirrored flag which is set in a mirrored/non-mirrored field of the table entry in the system cylinder table;
   switching a head in the disk drive; and
   accessing the system cylinder record at a mirrored location in the disk drive.

14. The method of accessing a system cylinder record in a disk drive of claim 10, further comprising, starting at the starting address and reading data from the system cylinder record to a buffer.

15. The method of accessing a system cylinder record in a disk drive of claim 14, further comprising:

   receiving a number indicating a number of sectors to be read;
   reading data, for the number of sectors to be read, from the system cylinder record to the buffer .

16. The method of accessing a system cylinder record in a disk drive of claim 10, further comprising, starting at the starting address and writing data from a buffer to the system cylinder record.

17. The method of accessing a system cylinder record in a disk drive of claim 16, further comprising:

   receiving a number indicating a number of sectors to be written;
   writing data, for the number of sectors to be written, from the buffer to the system cylinder record .

18. In a computer with a host processor and a disk drive, a method of the host processor reading data from a desired system cylinder record, comprising:

   sending a command from the host processor to the disk drive, said command including an index value identifying the desired record, a relative sector address, and a number indicating a number of sectors to be read;
   receiving said command in the disk drive;
   passing, to a read routine in the disk drive, the index value identifying said desired record, the relative sector address, and the number of sectors to read;
   receiving, in the read routine, the relative sector address and the index value, said index value identifying a desired table entry in a system cylinder table comprising a plurality of table entries;

using the index value to locate the desired table entry in a system cylinder table, accessing the desired table entry;

finding a relative record offset value in a relative record offset field of the desired table entry;

converting the relative record offset value and relative sector address into a starting address for the desired system cylinder record;

starting at the starting address and reading data, for the number of sectors to be read, from the desired system cylinder record to a buffer; and

transferring the data from the buffer to the host processor.

19. In a computer with a host processor and a disk drive, a method of the host processor writing data to a desired system cylinder record, comprising:

sending a write command from the host processor to the disk drive, said command including an index value identifying the desired record, a relative sector address, and a number indicating a number of sectors to be written;

receiving said write command in the disk drive;

transferring the data from the host processor to a buffer;

passing, to a write routine in the disk drive, the index value identifying said desired record, the relative sector address, and the number of sectors to be written;

receiving, in the write routine, the relative sector address and the index value, said index value identifying a desired table entry in a system cylinder table comprising a plurality of table entries;

using the index value to locate the desired table entry in a system cylinder table, accessing the desired table entry;

finding a relative record offset value in a relative record offset field of the desired table entry;

converting the relative record offset value and relative sector address into a starting address for the desired system cylinder record;

starting at the starting address and writing data, for the number of sectors to be written, from the buffer to the desired system cylinder record.

## Typical Record Processing

100

```
        ┌──────────────┐
        │   Process    │  ←── 105
        │    Data      │
        └──────────────┘
              ┊
              ▼
No        ╱─────────────╲       110
◄────────╱  Time to store ╲
         ╲ data on disk?  ╱
          ╲──────────────╱
              ┊
              Yes
              ▼
        ┌──────────────┐   120
        │   Call a     │
        │  read/write  │
        │  routine to  │
        │  update the  │
        │ record. Pass │
        │  the buffer  │
        │   address,   │
        │cylinder, head,│
        │    sector    │
        │ location, and │
        │  number of   │
        │    sector    │
        └──────────────┘
              ┊
              ▼
        ┌──────────────┐   130
        │              │
        │  Boundary    │
        │  check and   │
        │  update the  │
        │ cylinder/head/│
        │sector location│
        │ as required. │
        │              │
        └──────────────┘
```

Figure 1     – PRIOR ART

## ATA access of System Cylinder records

200

Host sends the cylinder, head, starting
sector, and the number of sectors to
transfer.

←— 210

Drive firmware validity checks the
command and calls a read/write routine
to update the record. Pass the buffer
address, cylinder, head, starting sector,
and number of sectors.

←— 220

Read/write routine transfers the
specified data to/from the host.

←— 240

Figure 2  —  PRIOR ART

# System Cylinder Table

| Index | Relative Record Offset | Record Size | Mirrored/Non-Mirrored |
|-------|------------------------|-------------|-----------------------|
| 0 | 2942 | 23 | x |
| 1 | 3016 | 110 | |
| 2 | 3212 | 33 | |
| 3 | 3307 | 5 | |
| 4 | 3319 | 31 | |
| 5 | 3391 | 17 | |
| 6 | 3444 | 33 | |
| 7 | 3517 | 25 | x |
| 8 | 3588 | 51 | |
| 9 | 3699 | 42 | x |
| 10 | 3749 | 29 | |
| 11 | 3803 | 53 | x |

300

305

320     330     340

# Figure 3

EP 0 953 893 A2

## TRAM Read Operation

400

User passes the index for the record, relative sector address, the number of sectors to transfer, and the buffer start address. ← 405

Boundary check the operation by insuring the relative sector and the number of sectors are within the record boundary. ← 410

Convert the index and relative sector to a cylinder/head/sector address. ← 415

420 —

Perform the read operation.

425 → Error on read?

No

Yes →

430

Mirrored record?

No

Yes

435

Switch to the next head.

Return

Return error

Figure 4a.

## TRAM Write Operation

*450*

User passes the index for the record, the relative sector address, the number of sectors to transfer, and the buffer address. ← *455*

Boundary check the operation by insuring the relative sector and the number of sectors does not exceed the record size. ← *460*

Convert the index and relative sector to a cylinder/head/sector address. *465*

Perform the write operation. *470*

Mirrored record? *475*

—Yes→ All heads written? *485*

No → Switch to the next head. *490*

No

Yes

Return

Return

## Figure 4b.

## TRAM ATA Command

500

```
Host sends TRAM command. Drive firmware      510
accepts and validity checks the command.
```

520

System Record
Inquiry
subcommand?

Yes

525

.Transfer System Cylinder
table to the host.

No

545

Yes

Read System
Record
subcommand?

540

Set up the index for the record,
relative sector address, number
of sectors to transfer, and the
buffer start address and call
TRAM read operation.

No

Transfer the system cylinder
record data to the host.

560

Write System
Record
subcommand?

Yes

550

565

Transfer the system cylinder
record data from the host.

No

580

Reject the
command.

Set up the index for the record,
relative sector address, number
of sectors to transfer, and the
buffer start address and call
TRAM write operation.

570

Figure 5.